# EUROPÄISCHE PATENTSCHRIFT

(11) **EP 3 667 279 B1**
(45) Veröffentlichungstag und Bekanntmachung des Hinweises auf die Patenterteilung: **01.12.2021**
(21) Anmeldenummer: 18211442.1
(22) Anmeldetag: 10.12.2018
(51) Int. Cl.: G01L 9/00, G01L 11/02, G01D 5/34

(54) **SENSOREINRICHTUNG**
SENSING DEVICE
CAPTEUR

(43) Veröffentlichungstag der Anmeldung: 17.06.2020
(73) Patentinhaber: FRAUNHOFER-GESELLSCHAFT zur Förderung der angewandten Forschung e.V., 80686 München (DE); IHP GmbH Leibniz-Institut für innovative Mikroelektronik, 15236 Frankfurt/Oder (DE)
(72) Erfinder: Dziallas, Giannino, 13351 Berlin (DE); Dr. Zimmermann, Lars, 10623 Berlin (DE); Dr. Tekin, Tolga, Berlin 13353 (DE); Prof. Ngo, Ha Duong, 10247 Berlin (DE)
(74) Vertreter: Pfenning, Meinig & Partner mbB

(56) Entgegenhaltungen:
- US-A- 4 989 979
- US-A1- 2012 096 956
- US-A1- 2016 273 980

## Beschreibung

Die Erfindung liegt auf dem Gebiet der Sensoren und ist mit besonderem Vorteil für Kraft- und/oder Drucksensoren einsetzbar. Dies schließt jedoch die Anwendbarkeit in anderen Bereichen nicht aus.

Es sind in der Vergangenheit bereits Sensoren für verschiedene Größen bekannt geworden, die sich besonders dünner Membranen bedienen, die als 2-D-Nanomaterialien bezeichnet werden. Solche Membranen sind als ein-oder mehrlagige Schichten von Atomen oder Molekülen ausgebildet und dadurch extrem massearm und flexibel. Einige derartige Materialien weisen auch in derart dünner Form eine hohe Stabilität und Bruchfestigkeit auf.

Einige bekannte Sensoren erfassen eine Auslenkung einer solchen Membran zur Anzeige einer Wechselwirkung mittels eines an einer Membran reflektierten Lichtstrahls oder mittels einer Messung einer elektrischen Kapazität oder des elektrischen Widerstands eines Piezokristalls.

Optische Membrandruck- bzw. kraftsensoren sind im Stand der Technik aus US 2012/096956 A1, US 4 989 979 A und US 2016/273980 A1 bekannt.

Der vorliegenden Erfindung liegt die Aufgabe zugrunde, einen mechanisch und gegenüber Umgebungsbedingungen widerstandsfähigen, empfindlichen, schnell und reproduzierbar reagierenden Sensor für eine Kraft oder einen Fluiddruck zu schaffen.

Die Aufgabe wird durch eine Sensoreinrichtung mit den Merkmalen des Patentanspruchs 1 gelöst. Mögliche Implementierungen der Sensoreinrichtung gehen aus den Patentansprüchen 2 bis 10 hervor. Ein Verfahren zur Lösung der Aufgabe ist der Gegenstand des Patentanspruchs 11.

Die Erfindung bezieht sich demnach auf eine Sensoreinrichtung mit einer auslenkbaren Membran aus einem flexiblen Material, wobei die Membran aus einem weniger als 10 Atomlagen dicken 2D-Nanomaterial besteht, einem der Membran benachbarten, in wenigstens einem ersten Abschnitt entlang der Oberfläche der Membran verlaufenden ersten Lichtwellenleiter zur Führung von Licht, wobei die Membran vom ersten Lichtwellenleiter weg auslenkbar oder derart auslenkbar ist, dass sie sich dem Lichtwellenleiter nähert, sowie mit einer Messeinrichtung zur Messung des Einflusses der Membran innerhalb des ersten Abschnitts auf einen evaneszenten Wellenanteil des Lichts, das entlang dem ersten Lichtwellenleiter geführt ist.

Die Sensoreinrichtung weist demnach eine Membran aus einem 2-D-Nanomaterial auf. Ein solches Material, für das weiter unten konkrete Beispiele angegeben werden, umfasst üblicherweise eine oder wenige Atomlagen eines Materials oder verschiedener Materialien und ist dadurch extrem massearm und flexibel. Eine derartige Membran aus einem 2-D-Nanomaterial kann daher leicht durch eine Krafteinwirkung oder Druckeinwirkung bewegt werden. Üblicherweise ist die Membran derart eingespannt, dass eine Auslenkung der Membran gegen eine elastische Gegenkraft möglich ist. Die Auslenkung der Membran hängt somit eindeutig mit der ausgeübten Auslenckraft zusammen.

Die Auslenkung der Membran wird bei der Sensoreinrichtung dadurch gemessen, dass die Wirkung der Membran auf Licht gemessen wird, das sich entlang einem ersten Lichtwellenleiter ausbreitet. Dabei ist der erste Lichtwellenleiter zumindest in dem ersten Abschnitt der Membran derart benachbart, dass ein evaneszenter Wellenanteil des Lichts an dem Lichtwellenleiter, d. h. ein Lichtanteil, der aus dem Lichtwellenleiter selbst austritt, durch die Nähe des 2-D-Nanomaterials beeinflusst wird, insbesondere durch die Dielektrizitätskonstante des 2-D-Nanomaterials. Eine solche Wechselwirkung gelingt üblicherweise dadurch, dass an dem Lichtwellenleiter, der geeignet aufgebaut ist (weitere Ausführungen dazu siehe unten) ein optisches Fenster, vorzugsweise in dem ersten Abschnitt, vorgesehen ist, so dass in dem Bereich, in dem der Lichtwellenleiter entlang der Membran verläuft, der evaneszente Anteil des Lichts ausreichend groß und eine Einwirkung durch das 2-D-Nanomaterial auf den evaneszenten Wellenanteil möglich ist.

Die Wechselwirkung des evaneszenten Wellenanteils mit der Membran bewirkt durch die Änderung der Dielektrizitätskonstante eine Änderung der Ausbreitungskonstante für das entlang dem ersten Lichtwellenleiter transportierte Licht und somit eine Geschwindigkeitsänderung des Lichts. Unter der Ausbreitungskonstante, die auch Fortpflanzungskonstante genannt wird, wird die in der Leitungstheorie elektromagnetischer Wellen definierte Größe verstanden. Wird dieses Licht bezüglich seiner Phase mit einem separaten Lichtstrahl verglichen, der keine Wechselwirkung mit dem 2-D-Nanomaterial erfährt, so kann durch eine gemessene Differenz beispielsweise der Phase die Wechselwirkung mit der 2-D-Nanomaterial-Membran nachgewiesen werden.

Zum Vergleich eines Lichtanteils, der mit dem 2-D-Nanomaterial wechselwirkt, mit einem Lichtstrahl, der mit dem 2-D-Nanomaterial nicht oder in geringerem Maß wechselwirkt, können auch verschiedene Moden, die sich entlang des ersten Lichtwellenleiters bewegen, gesondert voneinander analysiert werden, soweit sichergestellt ist, dass die Wechselwirkung der Moden mit dem 2-D-Nanomaterial durch Ausbildung unterschiedlich starker evaneszenter Wellenanteile unterschiedlich stark ist.

Eine besondere Ausführungsform sieht vor, dass eine Vorrichtung zur Einstrahlung von kohärentem Licht wenigstens in den ersten Lichtwellenleiter und insbesondere auch in einen zweiten Lichtwellenleiter sowie eine interferometrische Messeinrichtung zur Messung der Ausbreitungskonstante oder einer Änderung der Ausbreitungskonstante des Lichts entlang dem ersten Lichtwellenleiter, insbesondere im Vergleich zu dem Licht, das sich entlang dem zweiten Lichtwellenleiter ausbreitet, vorgesehen ist. In diesem Fall kann das kohärente Licht, das durch den ersten Lichtwellenleiter transportiert wird, mit dem Licht verglichen werden, das durch den / entlang dem zweiten Lichtwellenleiter transportiert wird, wobei der zweite Lichtwellenleiter keine oder eine schwächere Wechselwirkung von evaneszentem Licht mit dem 2-D-Nanomaterial aufweist als der erste Lichtwellenleiter.

Zur Messung der Phasendifferenz und hieraus der Bestimmung der Änderung der Ausbreitungskonstante kann eine interferometrische Messeinrichtung verwendet werden, in der die Phasenlage des Lichts, das sich entlang dem ersten Lichtwellenleiter bewegt, und des Lichts, das sich entlang dem zweiten Lichtwellenleiter bewegt, miteinander verglichen werden.

Eine weitere Ausgestaltung kann vorsehen, dass die Membran eine Graphenschicht von weniger als 10 Atomlagen, insbesondere weniger als 5 Atomlagen, weiter insbesondere weniger als 3 Atomlagen, weiter insbesondere nur einer Atomlage aufweist. Derartige 2-D-Nanomaterialien in Form von Membranen sind hochflexibel und teilweise schon aus diesem Grund auch widerstandsfähig sowie sehr leicht/massearm.

Die Sensoreinrichtung kann auch dadurch verwirklicht werden, dass die Membran eine Schicht aus weniger als 10 Atomlagen, insbesondere weniger als 5 Atomlagen, weiter insbesondere weniger als 3 Atomlagen, weiter insbesondere nur eine Atomlage eines der folgenden Stoffe aufweist: Graphenoxid, Übergangsmetall-Dichalcogenide, Gruppe III-IV-Halbleiter, Molybdändisulfid, Bornitrid, Metalloxid, Black Phosphor oder Silizium- oder Germanium-2D-Material. Die aufgelisteten Stoffe sind als Materialien bekannt, die die Ausbildung einer mechanisch stabilen und ausreichend dünnen 2-D-Nanomaterial-Membran erlauben.

Eine weitere Ausgestaltung der Sensoreinrichtung kann zudem vorsehen, dass die Messeinrichtung ein Interferometer, insbesondere ein Fabry-Perot-Interferometer, ein Mach-Zehnder-Interferometer, einen Ringresonator oder ein Michelson-Interferometer, aufweist. Die genannten Bauformen von Interferometern lassen, ebenso wie weitere, hier nicht aufgezählte Interferometerformen, eine Messung und Bestimmung der relativen Phasenlage des Lichts zu, das sich entlang dem ersten Lichtwellenleiter unter dem Einfluss des 2-D-Nanomaterials ausbreitet.

Es kann zudem vorgesehen sein, dass das Interferometer mit dem ersten Lichtwellenleiter sowie einem zweiten Lichtwellenleiter verbunden ist, wobei der zweite Lichtwellenleiter derart angeordnet ist, dass die Membran keinen oder nur geringen Einfluss auf das entlang dem zweiten Lichtwellenleiter geführte Licht ausübt.

Der erste Lichtwellenleiter oder beide Lichtwellenleiter können als dünne epitaktisch aufgebrachte Schichten auf einem Trägermaterial, beispielsweise als Siliziumschicht auf einem Isolator, gestaltet sein. Derartige Lichtwellenleiter sind in verschiedenen Bauarten bereits an sich bekannt.

Eine weitere Ausgestaltung der Sensoreinrichtung kann vorsehen, dass die Membran einen fluidgefüllten, insbesondere gasgefüllten ersten Raum begrenzt und durch Druckänderungen in dem ersten Raum auslenkbar ist. Eine solche Bauform erlaubt mittels der Membran die Messung eines hydraulischen oder pneumatischen Drucks in dem ersten Raum oder die Messung einer Kraft, die auf die Membran wirkt und diese auslenkt.

Es kann auch vorgesehen sein, dass die Membran ein ferromagnetisches Material oder eine ferromagnetische Komponente aufweist, derart, dass ein auf die Membran einwirkendes Magnetfeld eine Auslenkung der Membran bewirkt. In diesem Fall kann durch die Auslenkung der Membran die Wirkung eines Magnetfelds gemessen werden.

Es kann zur Kalibrierung der Sensoreinrichtung und zur Einstellung des Arbeitspunktes vorgesehen sein, dass Abstand zwischen der Membran und dem ersten Lichtwellenleiter einstellbar ist.

Die beschriebene Lösung für eine Sensoreinrichtung umfasst zudem ein Verfahren nach Anspruch 11.

Im Folgenden wird die Erfindung anhand eines Ausführungsbeispiels in Figuren einer Zeichnung gezeigt und nachfolgend beschrieben. Dabei zeigt
- Fig. 1: schematisch ein Gehäuse mit einer Membran, das einen Raum einschließt, wobei die Membran einem Lichtwellenleiter benachbart ist,
- Fig. 2: ein Gehäuse ähnlich dem aus Figur 1 mit einer Membran, die zum Gehäuseinnenraum ausgelenkt ist,
- Fig. 3: eine Draufsicht auf eine Membran als Teil eines Gehäuses,
- Fig. 4: einen Längsschnitt durch einen Lichtwellenleiter, u. a. mit einem ersten Abschnitt, in dem eine Wechselwirkung von Licht mit einer Membran aus einem 2-D-Nanomaterial stattfindet, sowie
- Fig. 5: schematisch eine Sensoreinrichtung mit zwei Lichtwellenleitern und einem Interferometer sowie einer typischen aufgenommenen Messkurve.

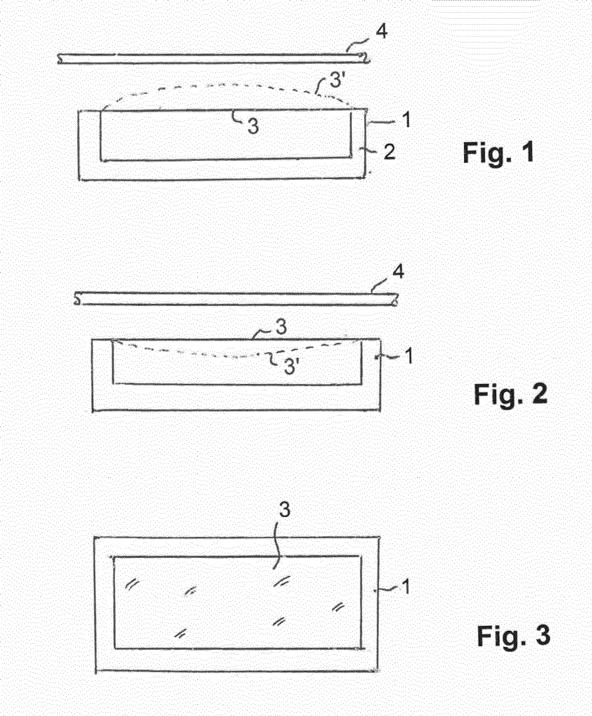

Figur 1 zeigt schematisch in einem Querschnitt ein Gehäuse 1 mit einer Gehäusewand 2, wobei das Gehäuse 1 an seiner Oberseite durch eine Membran 3, 3' aus einem 2-D-Nanomaterial begrenzt ist. Die durchgezogene Linie 3 an der Oberseite des Gehäuses 1 bezeichnet die Membran in einem nicht ausgelenkten Zustand, während die gestrichelte Linie 3' die Membran in einem zum Gehäuseäußeren ausgelenkten Zustand bezeichnet.

Oberhalb des Gehäuses 1 ist schematisch ein Lichtwellenleiter 4 eingezeichnet, der sich entlang der Membran erstreckt. Die Membran nähert sich im ausgelenkten Zustand 3' dem Lichtwellenleiter an, so dass die Wechselwirkung der Membran mit einem evaneszenten Wellenanteil des entlang dem Lichtwellenleiter 4 sich ausbreitenden Lichts verstärkt wird. Der Abstand der Membran 3, 3' von dem Lichtwellenleiter 4 kann typischerweise einige Mikrometer bis zu 100 Mikrometern oder sogar bis zu 1 Millimeter betragen. Die Auslenkung der Membran kann typisch wenige Mikrometer, beispielsweise weniger als 10 Mikrometer betragen.

Das Gehäuse 1 kann gas- oder fluiddicht den Gehäuseinnenraum umschließen, so dass eine Druckänderung in dem Gehäuse 1 zu einer Auslenkung der Membran 3, 3' führt. Wird die Auslenkung der Membran durch eine Änderung der Wechselwirkung des Lichts mit der Membran registriert, so können mit der gezeigten Anordnung Druckunterschiede oder Druckänderungen gemessen werden.

In Figur 2 ist ein Gehäuse 1 wie in Figur 1 dargestellt, wobei die Membran 3, 3' in der gestrichelten Version von dem Lichtwellenleiter 4 weg ausgelenkt ist, beispielsweise durch eine Absenkung des Drucks in dem Gehäuse 1 oder durch eine andere Kraftwirkung auf die Membran, beispielsweise dadurch, dass die Membran ferromagnetisch ist und mit einem Magnetfeld wechselwirkt. Auf diese Weise kann über die Auslenkung der Membran eine Magnetfeldstärke gemessen werden.

In Figur 3 ist das Gehäuse 1 aus den Figuren 1 und 2 in einer Ansicht von oben gezeigt, so dass die an der Gehäusewand allseits befestigte Membran 3 als Fläche in einer Draufsicht sichtbar wird. Die Membran kann als 2-D-Nanomaterial, beispielsweise aus Graphen, Graphenoxid, einem Übergangsmetall-Dichalcogenid, einem Gruppe-III-IV-Halbleiter, Molybdänsulfid, Bornitrid, Metalloxid, schwarzem Phosphor oder einem Silizium- oder Germanium-2-D-Material bestehen oder ein solches Material gemeinsam mit anderen Materialien umfassen. Beispielsweise kann das 2-D-Nanomaterial zur Erfassung von Magnetfeldern abschnittsweise mit einem ferromagnetischen Material geringer Dicke beschichtet sein.

Der Lichtwellenleiter, der in den Figuren 1 und 2 schematisch dargestellt ist, ist vorteilhaft als epitaktisch aufgebrachtes Siliziummaterial auf einem Siliziumoxid angeordnet, wobei die Wellenleiterbreite etwa 400 Nanometer betragen kann. Der Lichtwellenleiter kann dabei eine gestreckte Strangform aufweisen, er kann jedoch zur Erhöhung der Wechselwirkung mit dem 2-D-Nanomaterial in einem ersten Abschnitt auch mehrfach gekrümmt, beispielsweise mäanderförmig oder spiralig, vorliegen. Dabei können zumindest zwei Längsabschnitte des Lichtwellenleiters etwa parallel zueinander und/oder in gleichbleibendem Abstand zueinander verlaufen und gleich- oder gegensinnig von einem Lichtstrahl durchlaufen werden.

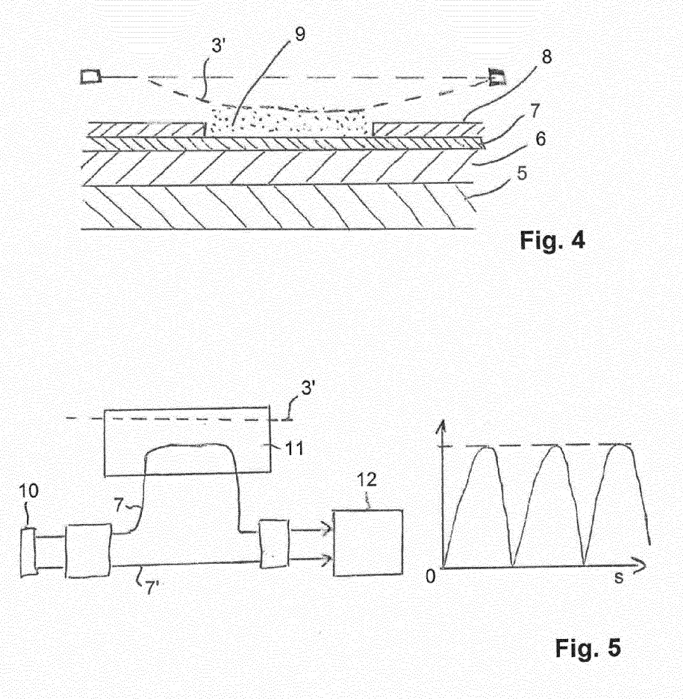

In Figur 4 ist die Sensoranordnung schematisch dargestellt, mit einem Substrat 5, einer Schicht aus Siliziumoxid 6 sowie einem Silizium-Wellenleitermaterial 7, das epitaktisch auf das Siliziumoxid aufgebracht ist. Das Wellenleitermaterial 7 ist größtenteils durch eine Deckschicht 8 abgedeckt, wobei jedoch ein erster Abschnitt in Form eines Fensters 9 von etwa 1 mm Länge frei gelassen ist. Die Deckschicht besteht aus Siliziumdioxid. Im Bereich des Fensters ist die Deckschicht weggelassen oder besteht aus einem weniger stark das Licht reflektierenden Material. In diesem Bereich, der in Figur 4 gepunktet dargestellt ist, tritt ein vergrößerter evaneszenter Wellenanteil aus dem Material des Wellenleiters 7 aus, so dass dieser Wellenanteil mit dem Material der Membran 3' wechselwirken kann. Das 2-D-Nanomaterial der Membran weist üblicherweise eine höhere Dielektrizitätskonstante als Luft auf, so dass die durch die Wechselwirkung der evaneszenten Welle mit dem 2-D-Nanomaterial eine Änderung der Ausbreitungskonstante der entlang dem Lichtwellenleiter 7 wandernden Lichtwelle stattfindet. Wird die Membran 3', wie in der Figur 4 gezeigt, derart ausgelenkt, dass sie sich dem Lichtwellenleitermaterial 7 im Bereich des Fensters 9 nähert, so verstärkt sich der Einfluss auf den evaneszenten Wellenanteil. Die Änderung der Ausbreitungskonstante kann durch den Phasenvergleich mit einer Lichtwelle ermittelt werden, die durch das 2-D-Nanomaterial nicht beeinflusst ist. Dies kann beispielsweise eine zweite Mode sein, die sich entlang dem Lichtwellenleitermaterial 7 derart bewegt, dass ihr evaneszenter Wellenanteil kleiner ist als der evaneszente Wellenanteil einer ersten vermessenen Mode, oder es kann mit dem Licht, das sich entlang dem ersten Lichtwellenleiter 7 ausbreitet, ein Lichtanteil verglichen werden, der durch einen zweiten Lichtwellenleiter transportiert wird, welcher nicht dem Einfluss der Membran 3' / des 2-D-Nanomaterials unterworfen ist.

Ein solcher zweiter Lichtwellenleiter kann beispielsweise ebenfalls auf dem Substrat 5 derart angeordnet sein, dass er kein Fenster in seiner Abdeckung aufweist und/oder dass sein Abstand zu der Membran 3' grundsätzlich größer ist als der Abstand des Wellenleiters 7 zu der Membran.

Die Messung der Änderung der Ausbreitungskonstante in schematisch in Figur 5 dargestellt. Dort ist eine kohärente Lichtquelle 10 dargestellt, aus der kohärentes Licht in den ersten Lichtwellenleiter 7 und einen zweiten Lichtwellenleiter 7' geleitet wird. Der erste Lichtwellenleiter 7 ist im Bereich eines Fensters 11 in einem ersten Abschnitt 9 wenigstens teilweise von seiner Abdeckung befreit, so dass in diesem Bereich ein starker evaneszenter Wellenanteil entsteht, der mit der Membran 3' wechselwirken kann. Das Licht breitet sich weiter entlang dem ersten Wellenleiter 7 zu einem Interferometer 12 aus, wo das entlang dem ersten Lichtwellenleiter 7 transportierte Licht mit dem entlang dem zweiten Lichtwellenleiter 7' transportierten Licht interferometrisch überlagert wird, um Phasenunterschiede zu vermessen. In dem Diagramm auf der rechten Seite der Figur 6 ist auf der x-Achse/Ordinate der Weg s dargestellt, den die Membran entlang ihrer Auslenkung bewegt wird. Von links nach rechts wächst somit linear die Auslenkung der Membran. Auf der y-Achse/Abszisse ist das interferometrisch überlagerte Signal der durch die Lichtwellenleiter 7, 7' transportierten Lichtstrahlen sichtbar gemacht. Legt die Membran einen linearen Weg zurück, so wird entlang der Auslenkung der Membran mehrfach eine Phasendifferenz von λ/2 zwischen dem Licht, das mit dem 2-D-Nanomaterial wechselwirkt, und dem nicht mit dem Nanomaterial wechselwirkenden Licht durchlaufen. Somit kann durch interferometrische Auswertung die Auslenkung der Membran 3, 3' mit hoher Auflösung und kraftfrei gemessen werden.

Die dargestellte Sensoreinrichtung hat den Vorteil, dass die genutzten 2-D-Nanomaterialien sehr elastisch und chemisch widerstandsfähig sind, eine hohe Bruchwiderstandsfähigkeit aufweisen und in sehr dünnen Lagen herstellbar sind. Die Sensoreinrichtung ist sehr einfach aufgebaut, benötigt keine Abschirmung und bis auf die interferometrische Messung keine Energiezufuhr. Sie ist in sehr kleinen Baugrößen herstellbar und sehr leicht. Die Empfindlichkeit gegenüber Auslenkungen der Membran ist sehr hoch und kann zudem dynamisch einstellbar sein. Durch die geringe Masse der Membran können sehr schnelle Änderung der Auslenkung erfasst werden, wobei die Begrenzung der Erfassungsgeschwindigkeit im Wesentlichen durch die Auswerteelektronik bedingt ist.

## Patentansprüche

1. Sensoreinrichtung mit einer auslenkbaren Membran (3, 3') aus einem flexiblen Material, einem der Membran benachbarten, in wenigstens einem ersten Abschnitt (9) entlang der Oberfläche der Membran verlaufenden ersten Lichtwellenleiter zur Führung von Licht, wobei die Membran vom ersten Lichtwellenleiter weg auslenkbar oder derart auslenkbar ist, dass sie sich dem Lichtwellenleiter nähert, sowie mit einer Messeinrichtung zur Messung des Einflusses der Membran innerhalb des ersten Abschnitts (9) auf einen evaneszenten Wellenanteil des Lichts, das entlang dem ersten Lichtwellenleiter geführt ist,
**dadurch gekennzeichnet, dass** die Membran aus einem weniger als 10 Atomlagen dicken 2D-Nanomaterial besteht.

2. Sensoreinrichtung gemäß Patentanspruch 1, **dadurch gekennzeichnet, dass** eine Vorrichtung (10) zur Einstrahlung von kohärentem Licht wenigstens in den ersten Lichtwellenleiter und insbesondere auch in einen zweiten Lichtwellenleiter sowie eine interferometrische Messeinrichtung zur Messung der Ausbreitungskonstante oder der Änderung der Ausbreitungskonstante des Lichts entlang dem ersten Lichtwellenleiter, insbesondere im Vergleich zu dem Licht, das sich entlang dem zweiten Lichtwellenleiter ausbreitet, vorgesehen ist.

3. Sensoreinrichtung nach Anspruch 1 oder 2, **dadurch gekennzeichnet, dass** die Membran (3, 3') eine Graphenschicht von weniger als 10 Atomlagen, insbesondere weniger als 5 Atomlagen, weiter insbesondere weniger als 3 Atomlagen, weiter insbesondere nur einer Atomlage aufweist.

4. Sensoreinrichtung nach Anspruch 1, 2 oder 3, **dadurch gekennzeichnet, dass** die Membran (3, 3') eine Schicht aus weniger als 5 Atomlagen, weiter insbesondere weniger als 3 Atomlagen, weiter insbesondere nur einer Atomlage eines der folgenden Stoffe aufweist: Graphenoxid, Übergangsmetall-Dichalcogenide, Gruppe III-IV-Halbleiter, Molybdändisulfid, Bornitrid, Metalloxid, schwarzer Phosphor oder Silizium- oder Germanium-2D-Material.

5. Sensoreinrichtung nach Anspruch 1 oder einem der folgenden, **dadurch gekennzeichnet, dass** die Messeinrichtung (10, 12) ein Interferometer (12), insbesondere ein Fabry-Perot-Interferometer, ein Mach-Zehnder-Interferometer, einen Ringresonator oder ein Michelson-Interferometer, aufweist.

6. Sensoreinrichtung nach Anspruch 5, **dadurch gekennzeichnet, dass** das Interferometer mit dem ersten Lichtwellenleiter (7) sowie einem zweiten Lichtwellenleiter (7') verbunden ist, wobei der zweite Lichtwellenleiter (7') derart angeordnet ist, dass die Membran (3, 3') keinen Einfluss auf das entlang dem zweiten Lichtwellenleiter geführte Licht ausübt.

7. Sensoreinrichtung nach Anspruch 1 oder einem der folgenden, **dadurch gekennzeichnet, dass** wenigstens der erste Lichtwellenleiter (7), insbesondere der erste und der zweite Lichtwellenleiter (7, 7'), ein nanophotonischer Silizium-Wellenleiter ist oder eines der folgenden Materialien aufweist oder aus einem solchen Material besteht: Silizium, Siliziumnitrid, III-V-Wellenleiter, Siliziumoxid/-nitrid-Wellenleiter, Sol (Silicon on Insulator).

8. Sensoreinrichtung nach Anspruch 1 oder einem der folgenden, **dadurch gekennzeichnet, dass** die Membran (3, 3') einen fluidgefüllten, insbesondere gasgefüllten ersten Raum begrenzt und durch Druckänderungen in dem ersten Raum auslenkbar ist.

9. Sensoreinrichtung nach Anspruch 1 oder einem der folgenden, **dadurch gekennzeichnet, dass** die Membran (3, 3') ein ferromagnetisches Material oder eine ferromagnetische Komponente aufweist, derart, dass ein auf die Membran einwirkendes Magnetfeld eine Auslenkung der Membran bewirkt.

10. Sensoreinrichtung nach Anspruch 1 oder einem der folgenden, **dadurch gekennzeichnet, dass** der Abstand zwischen der Membran (3, 3') und dem ersten Lichtwellenleiter einstellbar ist.

11. Verfahren zur Messung von Druck oder Druckänderungen mittels einer Membran (3, 3') aus einem weniger als 10 Atomlagen dicken 2-D-Nanomaterial, die von einem ersten Lichtwellenleiter (7, 7') weg ausgelenkt oder derart ausgelenkt wird, dass sie sich dem ersten Lichtwellenleiter nähert, wobei kohärentes Licht durch wenigstens einen ersten Lichtwellenleiter (7, 7') geführt wird, der so nahe an der Membran angeordnet ist, dass ein evaneszenter Teil des entlang dem ersten Lichtwellenleiter (7) geführten Lichtes in einem ersten Abschnitt (9) mit dem Material der Membran wechselwirkt und dass eine Phasenlage und/oder Phasenverschiebung des entlang dem ersten Lichtwellenleiter geführten Lichtes gemessen sowie insbesondere mit der Phasenlage von nicht mit der Membran wechselwirkendem Licht verglichen wird.

## Claims

1. A sensor device having a deflectable membrane (3, 3') made of a flexible material, a first optical waveguide for guiding light, which is adjacent to the membrane and extends in at least a first section (9) along the surface of the membrane, the membrane being deflectable away from the first optical waveguide or being deflectable such that it approaches the optical waveguide, and the sensor device having a measuring device for measuring the influence of the membrane within the first section (9) on an evanescent wave component of the light which is guided along the first optical waveguide,
**characterized in that** the membrane consists of a 2D nanomaterial that is less than 10 atomic layers thick.

2. The sensor device according to patent claim 1, **characterized in that** a device (10) is provided for irradiating coherent light at least into the first optical waveguide and particularly also into a second optical waveguide and an interferometric measuring device for measuring the propagation constant or the change in the propagation constant of the light along the first optical waveguide, particularly in comparison to the light that propagates along the second optical waveguide.

3. The sensor device according to claim 1 or 2, **characterized in that** the membrane (3, 3') comprises a graphene layer of less than 10 atomic layers, particularly less than 5 atomic layers, more particularly less than 3 atomic layers, more particularly only one atomic layer.

4. The sensor device according to claim 1, 2 or 3, **characterized in that** the membrane (3, 3') has a layer of less than 5 atomic layers, more particularly less than 3 atomic layers, more particularly only one atomic layer of one of the following substances: graphene oxide, transition metal dichalcogenides, group III-IV semiconductors, molybdenum disulfide, boron nitride, metal oxide, black phosphorus or silicon or germanium 2D material.

5. The sensor device according to claim 1 or any one of the following, **characterized in that** the measuring device (10, 12) comprises an interferometer (12), particularly a Fabry-Perot interferometer, a Mach-Zehnder interferometer, a ring resonator or a Michelson interferometer.

6. The sensor device according to claim 5, **characterized in that** the interferometer is connected to the first optical waveguide (7) and a second optical waveguide (7'), wherein the second optical waveguide (7') is arranged such that the membrane (3, 3') exerts no influence on the light guided along the second optical waveguide.

7. The sensor device according to claim 1 or any one of the following, **characterized in that** at least the first optical waveguide (7), particularly the first and the second optical waveguide (7, 7'), is a nanophotonic silicon waveguide or comprises one of the following materials or consists of such a material: silicon, silicon nitride, III-V waveguide, silicon oxide/nitride waveguide, SOI (silicon on insulator).

8. The sensor device according to claim 1 or any one of the following, **characterized in that** the membrane (3, 3') delimits a fluid-filled, particularly gas-filled first space and is deflectable by pressure changes in the first space.

9. The sensor device according to claim 1 or any one of the following, **characterized in that** the membrane (3, 3') comprises a ferromagnetic material or a ferromagnetic component such that a magnetic field acting on the membrane causes a deflection of the membrane.

10. The sensor device according to claim 1 or any one of the following, **characterized in that** the distance between the membrane (3, 3') and the first optical waveguide is adjustable.

11. A method for measuring pressure or pressure changes by means of a membrane (3, 3') made of a 2D nanomaterial less than 10 atomic layers thick, which is deflected away from a first optical waveguide (7, 7') or deflected such that it approaches the first optical waveguide, coherent light being guided through at least one first optical waveguide (7, 7') which is arranged so close to the membrane that an evanescent part of the light guided along the first optical waveguide (7) interacts with the material of the membrane in a first section (9) and that a phase position and/or phase shift of the light guided along the first optical waveguide is measured and, particularly, is compared with the phase position of light that does not interact with the membrane.

## Revendications

1. Dispositif capteur avec une membrane (3, 3') peut être déployée à base d'un matériau souple, un premier guide d'onde optique au voisinage de la membrane, s'étendant au moins dans une première section (9) le long de la surface de la membrane, pour le guidage de lumière, dans lequel la membrane peut être déployée à partir du premier guide d'onde optique ou peut être déployée de telle manière qu'elle se rapproche du guide d'onde optique, ainsi qu'avec un dispositif de mesure pour la mesure de l'effet de la membrane à l'intérieur de la première section (9) sur une composante des ondes évanescente de la lumière qui est menée le long du premier guide d'ondes optique,
**caractérisé en ce que** la membrane est constituée d'un nanomatériau en 2D d'une épaisseur inférieure à 10 couches d'atomes.

2. Dispositif capteur selon la revendication de brevet 1, **caractérisé en ce qu'**un dispositif (10) est prévu pour l'émission de lumière cohérente au moins dans le premier guide d'ondes optique et en particulier, également dans un deuxième guide d'ondes optique, ainsi qu'un dispositif de mesure interférométrique pour la mesure d'une constante d'étalement ou de la modification de la constante d'étalement de la lumière le long du premier guide d'onde optique, en particulier, en comparaison avec la lumière qui se déploie le long du deuxième guide d'onde optique.

3. Dispositif capteur selon la revendication 1 ou la revendication 2, **caractérisé en ce que** la membrane (3, 3') présente une couche de graphène de moins de 10 couches d'atomes, en particulier, de moins de 5 couches d'atomes, plus préférentiellement de moins de 3 couches d'atomes, plus préférentiellement uniquement d'une couche d'atomes.

4. Dispositif capteur selon la revendication 1, la revendication 2 ou la revendication 3, **caractérisé en ce que** la membrane (3, 3') présente une couche de moins de 5 couches d'atomes, plus préférentiellement de moins de 3 couches d'atomes, plus préférentiellement uniquement d'une couche d'atomes à base d'une des substances suivantes : l'oxyde de graphène, des dichalcogénures de métaux de transition, des semi-conducteurs des groupes III-IV, le disulfure de molybdène, le nitrure de bore, un oxyde métallique, le phosphore noir ou un matériau en 2D de silicium ou de germanium.

5. Dispositif capteur selon la revendication 1 ou l'une des revendications suivantes, **caractérisé en ce que** le dispositif de mesure (10, 12) présente un interféromètre (12), en particulier, un interféromètre de Fabry-Pérot, un interféromètre de Mach-Zehnder, un résonateur en anneau ou un interféromètre de Michelson.

6. Dispositif capteur selon la revendication 5, **caractérisé en ce que** l'interféromètre est relié avec le premier guide d'onde optique (7) ainsi qu'avec le deuxième guide d'onde optique (7'), où le deuxième guide d'onde optique (7') est disposé de telle manière que la membrane (3,3') n'exerce aucun effet sur la lumière menée le long du deuxième guide d'onde optique.

7. Dispositif capteur selon la revendication 1 ou l'une des revendications suivantes, **caractérisé en ce qu'**au moins le premier guide d'onde optique (7), en particulier, les premier et deuxième guides d'ondes optiques (7, 7'), sont des guides d'ondes de silicium nano photoniques ou présentent l'un des matériaux suivants, ou sont constitués d'un tel matériau : le silicium, le nitrure de silicium, des semi-conducteurs III-V, un semi-conducteur oxyde de silicium/nitrure, un Sol (silicium sur isolant).

8. Dispositif capteur selon la revendication 1 ou l'une des revendications suivantes, **caractérisé en ce que** la membrane (3, 3') délimite un premier espace rempli d'un fluide, en particulier, rempli de gaz et peut être déployée dans le premier espace du fait de modifications de la pression.

9. Dispositif capteur selon la revendication 1 ou l'une des revendications suivantes, **caractérisé en ce que** la membrane (3, 3') présente un matériau ferromagnétique ou un composant ferromagnétique de telle manière qu'un champ magnétique agissant sur la membrane provoque un déploiement de la membrane.

10. Dispositif capteur selon la revendication 1 ou l'une des revendications suivantes, **caractérisé en ce que** la distance entre la membrane (3, 3') et le premier guide d'ondes optique est réglable.

11. Procédé de mesure de la pression ou de la modifications de la pression au moyen d'une membrane (3, 3') à base d'un nanomatériau en 2D de moins de 10 couches d'atomes, qui peut être déployée à partir d'un premier guide d'onde optique (7, 7') ou peut être déployée de telle manière qu'elle se rapproche du premier guide d'onde optique, où de la lumière cohérente est menée à travers au moins un premier guide d'onde optique (7, 7'), qui est disposé si près de la membrane qu'une composante évanescente de la lumière, menée le long du premier guide d'ondes optique (7) dans une première section (9), interagisse avec le matériau de la membrane et qu'une position de phase et/ou un décalage de phase de la lumière menée le long du premier guide d'onde optique est mesuré(e) et se trouve ainsi comparé(e) en particulier avec la position de phase de la lumière n'interagissant pas avec la membrane.
